# EUROPÄISCHE PATENTANMELDUNG

(11) **EP 0 973 275 A2**
(43) Veröffentlichungstag der Anmeldung: **19.01.2000**
(21) Anmeldenummer: 99440196.6
(22) Anmeldetag: 13.07.1999
(51) Int. Cl.: H04B 10/06

(54) **Arbeitspunkteinstellung einer Diode eines Diodennetzwerkes durch Spannungseinprägung**

(30) Priorität: 15.07.1998 DE 19831715
(71) Anmelder: ALCATEL, 75008 Paris (FR)
(72) Erfinder: Berger, Werner, 71254 Ditzingen (DE); Braun, Klaus, 70435 Stuttgart (DE)
(74) Vertreter: Menzietti, Domenico, Dipl.-Ing

(57) **Zusammenfassung**

Ein Diodennetzwerk mit mindestens einer Diode, die im Betrieb im Weg eines HF-Signals liegt, wobei an die Diode zum Einstellen von deren Arbeitspunkt eine vorgegebene Diodenspannung angelegt ist, ist dadurch gekennzeichnet, daß eine Regelvorrichtung zum Konstanthalten der Diodenspannung vorgesehen ist.

Bei der Erfindung ist von Vorteil, daß durch die Erfassung der an der Diode selbst wirkenden, den Arbeitspunkt beeinflussenden Gleichspannung es nicht erforderlich ist, mit der Diode bezüglich Gleichstrom niederohmig eine Spannungsquelle zu koppeln.

## Beschreibung

Die Erfindung betrifft ein Diodennetzwerk mit mindestens einer Diode, die im Betrieb im Weg eines Hochfrequenzsignals liegt, wobei an die Diode zum Einstellen von deren Arbeitspunkt eine vorgegebene Diodenspannung angelegt ist.

Zum Einstellen des Arbeitspunkts einer Diode in einem signalbeeinflussenden Netzwerk ist einerseits Stromeinprägung bekannt, andererseits Spannungseinprägung. In US-A-5_210_633, Figur 2 ist eine Anordnung mit Stromeinprägung gezeigt. Bei einer derartigen Anordnung ändert sich die an der Diode liegende Gleichspannung in Abhängigkeit von Pegelschwankungen des von der Diode durchgelassenen Signals, das ein Hochfrequenzsignal sein kann. Bei dieser bekannten Anordnung kann somit dann, wenn es sich bei dem Diodennetzwerk um eine Vorverzerrerschaltung zum Linearisieren des Ausgangssignals eines optischen Modulators handelt, der Arbeitspunkt nur für einen einzigen Wert der Amplitude des Hochfrequenzsignals optimal eingestellt werden. Daher ist bei der bekannten Anordnung eine Nachführung der Stromquellen entsprechend der Amplituden des Eingangssignals für eine optimale Linearisierung der Kennlinie erforderlich.

Außerdem ist durch US-A_5_161_044, Figur 15 ein Diodennetzwerk der eingangs genannten Art zum Linearisieren des Ausgangssignals eines externen optischen Modulators, durch den das eine Lichtquelle verlassende Licht moduliert wird, bekannt. Dort sind die Anschlüsse zweiter antiparallel geschalteter Dioden im Signalweg des zu beeinflussenden Signals über Induktivitäten mit kleinem ohmschen Widerstand mit Spannungsquellen verbunden. Die Induktivitäten dienen dazu, den Signalweg von den Spannungsquellen zu entkoppeln. Ein Nachteil einer derartigen Anordnung besteht darin, daß die Induktivitäten Streukapazitäten aufweisen, so daß eine vollständige Entkopplung des Signalwegs von den Spannungsquellen nicht möglich ist.

Der Erfindung liegt die Aufgabe zugrunde, bei einer Anordnung der eingangs geschilderten Art eine Spannungseinprägung zu schaffen, bei der zur Entkopplung der Spannungsquelle von der Diode die Benutzung von Induktivitäten nicht erforderlich ist.

Diese Aufgabe wird dadurch gelöst, daß eine Regelvorrichtung zum Konstanthalten der Diodenspannung vorgesehen ist.

Bei der Erfindung ist von Vorteil, daß durch die Erfassung der an der Diode selbst wirkenden, den Arbeitspunkt beeinflussenden Gleichspannung es nicht erforderlich ist, mit der Diode bezüglich Gleichstrom niederohmig eine Spannungsquelle zu koppeln. Vielmehr kann die zur Arbeitspunkteinstellung der Diode dienende Quelle elektrische Energie mit der Diode über einen induktivitätsarmen ohmschen Widerstand gekoppelt sein, der so groß ist, daß er für die Hochfrequenz eine ausreichend gute Entkopplung bewirkt. Die Regelvorrichtung sorgt dafür, daß trotz dieses Widerstands an der Diode letztendlich eine auch bei Schwankungen des durch die Diode hindurch geleiteten Signals konstante Gleichspannung anliegt.

Bei einer Ausführungsform der Erfindung ist vorgesehen, die Regelvorrichtung Mittels Operationsverstärker zu verwirklichen.

Der Vorteil liegt darin, daß hierdurch eine leicht zu realisierende und betriebssicher arbeitende Schaltung ermöglicht wird.

Zur Erfindung gehört auch eine Anordnung, die einen externen optischen Modulator und ein erfindungsgemäßes Diodennetzwerk als Vorverzerrerschaltung aufweist.

Weiter Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen
- Fig. 1: ein Ausführungsbeispiel eines Dioden netzwerks mit Spannungseinprägung zum Einstellen der Arbeitspunkte der Dioden, wobei in den Signalweg eine Parallelschaltung mit jeweils mehreren Dioden eingeschaltet ist,
- Fig. 2: als Blockschaltbild die Anordnung mit einem optischen Modulator und einem erfindungsgemäßen Dioden netzwerk als Vorverzerrerschaltung.

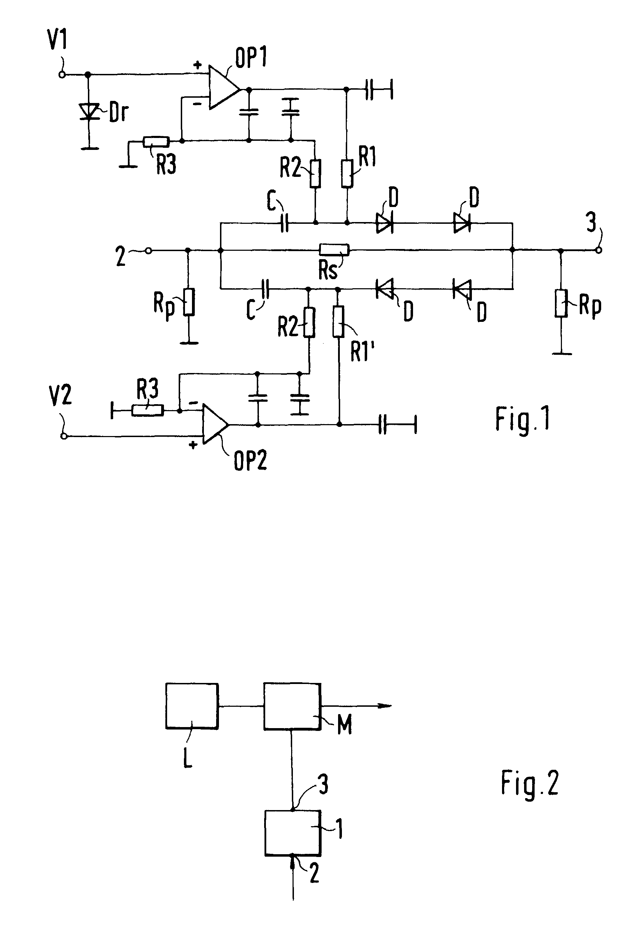

In Fig. 1 befindet sich der Signalweg einer signalbeeinflussenden Schaltung mit einem Diodennetzwerk, bei der es sich im Beispiel um eine Predistorterschaltung 1 (Vorverzerrerschaltung) handelt, zwischen einem Anschluß 2 (Eingang) und einem Anschluß 3 (Ausgang). Die Bedeutung dieser Anschlüsse 2 und 3 könnte auch vertauscht werden. Der Anschluß 2 einerseits und der und der Anschluß 3 andererseits sind jeweils über einem ohmschen Widerstand Rp mit Masse verbunden und die Anschlüsse 2 und 3 sind miteinander gleichstrommäßig durch einen Widerstand Rs verbunden. Hochfrequenzkomponenten des Signals fließen vom Anschluß 2 zum Anschluß 3 über zwei parallele Zweige, die jeweils aus der Serienschaltung eines Kondensators C und zweier Dioden D (Halbleiterdioden) gebildet sind, wobei die Dioden in den beiden Zweigen entgegengesetzt gepolt sind und die Kondensatoren C unmittelbar miteinander verbunden sind. Ein Operationsverstärker OP1 weist einen Ausgang auf, der über einen Widerstand R1 mit dem Verbindungspunkt 4 zwischen dem Kondensator C und der mit diesem verbundenen Diode D des oberen Zweiges verbunden ist. Der Verbindungspunkt 4 ist außerdem über einen Widerstand R2 mit dem invertierenden Eingang des Operationsverstärkers OP1 verbunden, und der invertierende Eingang ist außerdem über einen Widerstand R3 mit Masse verbunden. Der nicht-invertierende Eingang des Operationsverstärkers OP1 ist mit einem Pol einer Gleichspannungsquelle V1 verbunden, deren anderer Pol an Masse liegt. Einige zum Operationsverstärker OP1 führende Leitungen sind noch mit Kondensatoren in der gezeigten Weise mit Masse und untereinander verbunden, um Hochfrequenz aus dem Signalweg zwischen den Anschlüssen 2 und 3 vom Operationsverstärker OP1 fernzuhalten.

Die Spannung V1 ist im Beispiel positiv und so bemessen, daß es sich dabei um diejenige Spannung handelt, die von jeder einzelnen Diode D des oberen Zweiges zum Einstellen des gewünschten Arbeitspunkts benötigt wird. Die Wahl des Arbeitspunkts bestimmt die wirksame Steilheit der Diodenkennlinie. Die Widerstände R2 und R3 sind so bemessen, daß dem Verbindungspunkt 3 eine Spannung von 2_x_V1 zugeführt wird, entsprechend der Tatsache, daß zwei Dioden D in Serie geschaltet sind. Allgemein werden die Widerstände R2 und R3 so gewählt, daß dem Verbindungspunkt 3 eine Spannung k_x_V1 zugeführt wird, wobei k im Beispiel die Anzahl der in Serie geschalteten Dioden D ist. Es gilt k = 1 + R2/R3.

Der Widerstand R1 dient zur Entkopplung des Operationsverstärkers OP1 von dem Hochfrequenzsignal. Die Verstärkung des Operationsverstärkers OP1 wird durch das Verhältnis der Widerstände R2 und R3 eingestellt. Die genannten Widerstände sind extrem induktivitätsarm und kapazitätsarm; vorzugsweise sind sie sogenannte SMD-Widerstände (Surface Mounted Device-Widerstände). Die Schaltung kann daher ohne weiteres beispielsweise bis zu einer Frequenz von etwa 860_MHz betrieben werden.

Im Beispiel sind die Dioden D alle vom gleichen Typ. Bei Bedarf ist es möglich, unterschiedliche Dioden in den Serienschaltungen zu verwenden. Eine Serienschaltung von Dioden wird verwendet, wenn sich mit einer einzigen Diode die gewünschte Kennlinie der Signalbeeinflussung (Verzerrung bzw. Vorverzerrung) nicht erreichen läßt. Ist in einer Serienschaltung mit einem Kondensator C nur eine einzige Diode vorhanden, und ist die Spannung V1 die für diese Diode benötigte Spannung, so muß der zugeordnete Operationsverstärker eine Verstärkung 1 bewirken. Hierzu ist es zweckmäßig, den nach Masse führenden Widerstand R3 ersatzlos zu entfernen.

Eine ähnliche Schaltungsanordnung, wie sie im Zusammenhang mit dem Operationsverstärker OP1 beschrieben wurde, ist auch für den unteren Zweig vorgesehen, wobei der diesem zugeordnete Operationsverstärker das Bezugszeichen OP2 trägt und die dessen nicht-invertierenden Eingang zugeführte Spannung V2, die von einer zweiten Spannungsquelle geliefert wird, einen gegenüber Masse negativen Wert hat, weil nämlich der Verbindungspunkt 5 zwischen dem Kondensator C und der mit diesem verbundenen Diode D des unteren Zweigs an der Kathode der genannten Diode liegt, wogegen beim oberen Zweig der Verbindungspunkt 4 an der Anode der betreffenden Diode D liegt.

In Figur 2 sendet eine Lichtquelle L unmoduliertes Licht aus, das über einen Lichtleiter einem Eingang eines externen optischen Modulators M zugeführt wird und den Modulator M als moduliertes Licht verläßt. Das Modulationssignal wird über das Diodennetzwerk der Schaltung 1 einem Modulationsseingang des Modulators zugeführt.

Der externe Modulator M weist im Beispiel eine bekannte Phasenmodulatoranordnung mit einem optischen Element auf der Basis von Lithiumniobat (LiNbO₃) auf. Das Ausgangssignal eines derartigen Modulators ist im wesentlichen eine Kosinusquadratfunktion des Eingangssignals; steigt somit das Eingangssignal linear an, so hat das Ausgangssignal des Modulators einen sinusförmigen Verlauf. Die erfindungsgemäße Schaltung 1 hat als Vorverzerrer die Aufgabe, die erste halbe Periode symmetrisch zum Wendepunkt der Sinuskurve zu linearisieren. Dies geschieht dadurch, daß das Modulationssignal zuerst durch den Vorverzerrer so verändert wird, daß es bei seiner anschließenden Zuführung zum Modulator das gewünschte, bezüglich des nicht vorverzerrten Modulationssignals (= Hochfrequenzsignal) linear modulierte Lichtsignal erzeugt.

## Patentansprüche

1. Diodennetzwerk mit mindestens einer Diode, die im Betrieb im Weg eines HF-Signals liegt, wobei an die Diode zum Einstellen von deren Arbeitspunkt eine vorgegebene Diodenspannung angelegt ist,
dadurch gekennzeichnet, daß eine Regelvorrichtung zum Konstanthalten der Diodenspannung vorgesehen ist.

2. Diodennetzwerk nach Anspruch 1, dadurch gekennzeichnet, daß die Regelvorrichtung von der Diode (D) durch einen ohmschen Widerstand (R1) entkoppelt ist.

3. Diodennetzwerk nach Anspruch 1 oder 2, dadurch gekennzeichnet, daß die Regelvorrichtung einen Operationsverstärker (OP1, OP2) mit einem nicht-invertierenden und einem invertierenden Eingang aufweist, der als Spannungsverstärker geschaltet ist, daß an den nicht-invertierenden Eingang eine Steuerspannungsquelle angeschlossen ist, und daß ein Anschluß der Diode (D) mit dem Ausgang des Operationsverstärkers (OP1, OP2) gekoppelt ist.

4. Diodennetzwerk nach Anspruch 3, dadurch gekennzeichnet, daß der mit dem Ausgang des Operationsverstärkers (OP1, OP2) gekoppelte Anschluß der Diode (D) mit dem genannten Ausgang über einen Serienwiderstand (R1) gekoppelt ist.

5. Modulatorschaltung mit einem externen optischen Modulator, dadurch gekennzeichnet, daß in den Signalweg für dem Modulator (M) zuzuführende Modulationssignale als Vorverzerrer ein Diodennetzwerk nach einem der vorhergehenden Ansprüche eingeschaltet ist.
